# EUROPEAN PATENT SPECIFICATION

(11) **EP 2 618 910 B1**
(45) Date of publication and mention of the grant of the patent: **26.12.2018**
(21) Application number: 11801815.9
(22) Date of filing: 23.09.2011
(51) Int. Cl.: B01D 35/027

(54) **IMPROVED FILTERING DEVICE FOR THE FUEL PUMP OF A VEHICLE, METHOD OF MAKING AND USE**
VERBESSERTE FILTERVORRICHTUNG FÜR DIE KRAFTSTOFFPUMPE EINES FAHRZEUGS, HERSTELLUNGSVERFAHREN UND VERWENDUNG
DISPOSITIF DE FILTRATION AMÉLIORÉ POUR LA POMPE À CARBURANT D'UN VÉHICULE, PROCÉDÉ DE FABRICATION ET UTILISATION

(30) Priority: 24.09.2010 IT MI20101738
(43) Date of publication of application: 31.07.2013
(73) Proprietor: GVS S.p.A., 40069 Zola Predosa (Bologna) (IT)
(72) Inventor: SCAGLIARINI, Marco, I-40135 Bologna (IT)
(74) Representative: Ripamonti, Enrico
(86) International application number: PCT/IB2011/002257
(87) International publication number: WO 2012/038821

(56) References cited:
- EP-A1- 0 542 547
- EP-A1- 0 743 445
- DE-A1- 4 026 230
- DE-C1- 4 039 032
- US-A- 5 049 271

## Description

The present invention relates to a filtering device in accordance with the accompanying claims.

With particular but non-limiting reference to a fuel filtering device (or simply "filter"), this is known to be usually positioned on the suction side of a pump associated with the vehicle tank. In this manner, the pump withdraws fuel from said tank, which is suitably filtered by said filter before passing through the pump, and feeds it to the engine.

A filter of this type usually comprises a body defined by two panels joined together to define an internal closed filter cavity. This latter is connected to the pump suction side via an aperture in one of these panels. For the filter to operate correctly, the two panels (defined by a single filter element folded about itself and closed along its sides, or by two facing filter elements joined together along their sides) must be maintained separated so that the fuel from the tank, filtered by the filter body, can pass into the internal cavity of this latter, and from there reach the opposing side of the pump.

To maintain this separation and avoid contact between the surfaces of the filtering panels, which could lead to loss of filter operability, it is known to associate with at least a first of said layers a rigid structure or skeleton (usually of plastic material) facing the internal cavity of the filter body and associated with it by moulding on or by subsequent assembly. By cooperating with the second panel, this skeleton maintains it spaced from the first, so preventing its contact and maintaining the cavity in the interior of this body.

Although conceptually simple, this solution involves the formation of specific moulds for each filter produced (and possible further more complex assembly operations). In this respect, as the filters vary in shape and size on the basis of their use and/or of the tank in which they are to be positioned, each filter type or (at least) each filter family requires a particular mould to associate the rigid skeleton with said panel of its body.

This evidently affects the filter production cost and time. In addition, it is not possible to produce specific filters for particular applications and which do not fall within a type for which corresponding moulds already exist for forming the aforesaid rigid structures or skeletons.

EP 0743445 A1 describes a fuel filter in accordance with the introduction to the main claim. It comprises a body presenting two outer panels or layers defining an internal cavity. In this case, this cavity is divided into two chambers by a separator element, each chamber being provided with its own aperture (formed in a first panel of the filter body). In the cavity between each outer layer and the separator element, a corresponding tubular mesh reinforcement is positioned to prevent collapse of the chamber under pressure gradients.

This known solution describes the use of a tubular mesh reinforcement to maintain those filter panels or layers which define each of its chambers separated from each other. The above solution has many drawbacks.

Firstly, it must be considered that in passing through the tank or filter restrictions, a fuel such as gasoline considerably increases its electrostatic charge, which in certain situations can result in the creation of sparks which can consume the thinner parts of the tank to the extent of perforating them, with the risk of fire. To obviate this drawback, both the fuel pump and the filter must be earthed. This is achieved in various ways which, however, involve additional costs for the manufacturer of such components and/or for the vehicles which use them.

This drawback (i.e. the increase in electrostatic charge on the gasoline or other fuel) is in fact not opposed (and indeed is facilitated) by the use of a tubular mesh reinforcement in the filter, as this reinforcement presents holes and internal apertures of dimensions such as to facilitate electrostatic charge growth within the fuel, even for those allowable fuel throughputs through the tubular reinforcement. There is hence the absolute need to provide suitable earthing devices for the filter (and for the pump or other parts connected thereto) to prevent the aforesaid problems.

In addition, the mesh reinforcement described in the prior patent does not enable any capillary effect to be generated within the filter (because of the relatively large dimensions of its apertures) which would facilitate fuel passage through the filter towards the pump suction point when there is only a small fuel quantity in the tank. This can result in obvious problems for the user using the vehicle on which such a filter is mounted.

To this must be added the fact that the tubular mesh reinforcement described in the aforesaid European text presents considerable limitations in terms of dimensions and use. In this respect, considering that those filters currently used in commercial vehicle fuel tanks often have a limited space for their positioning (because of the small dimensions of those tanks used on small vehicles or motorcycles), these filters often assume folded shapes and complex geometries; in these, the use of a single reinforcement element such as that described in EP 0743445 requires it to be folded over along the filter folded regions, resulting in squashing the tubular element and consequent fuel flow restriction in these regions. The filter performance is hence reduced as it is not adequately traversed by the fuel flow in all its parts. Alternatively, more reinforcements have to be used, with increased costs.

Finally, the tubular mesh reinforcement described in the aforesaid European text must assume various shapes depending on the filter geometry. Considering the large number of vehicle models (for example cars) currently in circulation, the need often arises for a specific filter to adapt to the tank or pump unit of a particular car. The consequence of this, in the case of the known solution, is the need to produce tubular elements of different dimensions (width and/or length) with the consequent necessity to provide production plants which differ according to the type of element to be produced or the need to adapt existing plants to particular market requirement. All this involves considerable industrial investment and costs for their production.

An object of the present invention is to provide a filtering device or filter which is improved compared with known filters, to cooperate with fluids used in a vehicle, such as its fuel, a lubricant or the like.

A particular object of the invention is to provide a filter which does not require the rigid structure or skeleton which in known filters prevents contact between its panels.

A further object is to provide a filter of the stated type which can be quickly adapted to the various utilization requirements at very low cost, and which can also be quickly modified following a required change in its use.

A further object of the invention is to provide a filter of the stated type which drastically reduces the growth in electrostatic charges in the fuel as it passes through the filter, to at least drastically limit the problems and costs involved in earthing the filter and/or the parts which cooperate with it.

A further object is to provide a filter of the stated type which aids the suction exerted by the pump on the fuel, even if this is present only in small quantity in the tank.

These and other objects which will be apparent to the expert of the art are attained by a filtering device in accordance with the accompanying claims.

The present invention will be more apparent from the accompanying drawings, which are provided by way of non-limiting example and in which:
Figure 1 is an exploded perspective view of a filtering device according to the invention;
Figure 2 is a section on the line 2-2 through the device of Figure 1, but shown in its utilization position;
Figure 3 is a perspective view of another embodiment of the invention shown in partial section; and
Figure 4 is a cross-section through the device of Figure 1 but shown in a particular utilization position.

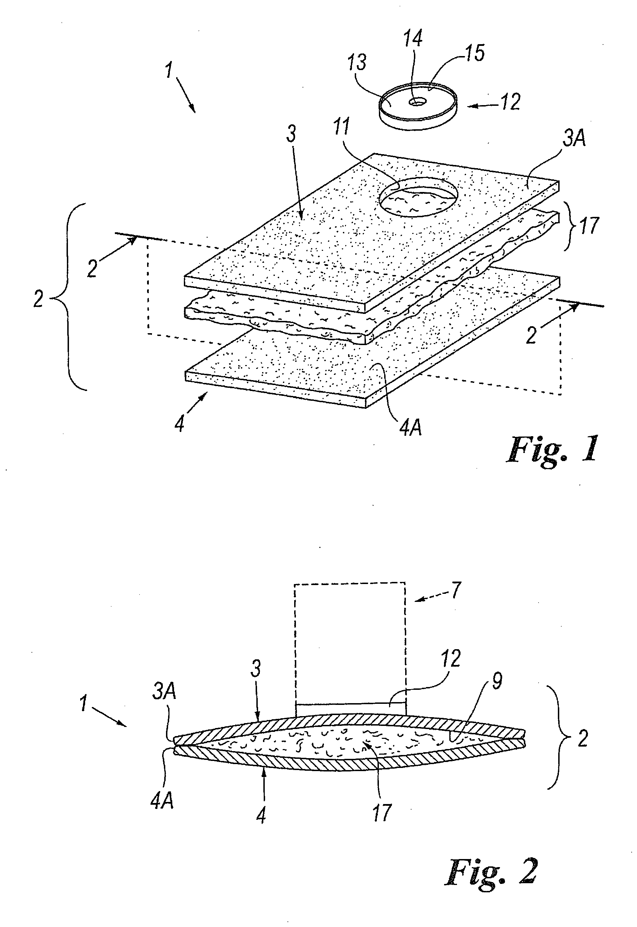

With reference to said figures, and in particular to Figures 1, 2 and 4, the filtering device (or simply filter) according to the invention is indicated overall by 1 and comprises a body 2 defined by joining two (originally flat) panels 3 and 4 together along a perimetral edge thereof, 3A and 4A respectively. The joint between the edges 3A and 4A of the panels 3 and 4 is made by welding (for example thermowelding, ultrasonic welding, radiofrequency welding, linear vibration welding or the like), adhesive-bonding, or other known methods. Each panel defining the body 2 is of known filtration material (such as single or multi-layer non-woven fabric in various combinations, woven nets, or in square mesh or with different textures, and/or single or coupled celluloses of various types) and is able to filter a fuel (such as gasoline, diesel fuel) contained in a tank (not shown) before it passes to the suction side of a pump 7 connected to the usual fuel injection system of a vehicle engine (not show).

The filter body 2 presents an internal cavity 9 into which the fuel penetrates before reaching the pump, drawn by this latter. For this purpose the cavity 9 communicates with said suction side of the pump 7 via an aperture 11 provided in a first (3) of the aforesaid panels 3 and 4. Advantageously, a discoidal connection element 12, for example of plastic material, is positioned at this aperture 11 to enable the fuel pump to be disposed on and coupled to the filter 1. This (known) disc presents a flat part 13 with a hole 14 for fuel passage to the pump 7, and a raised perimetral edge 15 for supporting the pump and guiding its connection to the element 12 and hence to the filter 1.

The presence of the internal cavity 9 is necessary for the correct operation of the pump. Consequently it is equally necessary that the panels 3 and 4 of the body 2 always remain separated from each other. For this reason, a spacer 17 of open-cell reticulated polymer (or reticulated foam) is inserted into the cavity 9 so that by interposing itself between the panels 3 and 4 (which sandwich-enclose it) it prevents their mutual contact. This spacer 17, having essentially the appearance of a sponge, is of a material able to form reticulated foam, such as urethane, polyester, polyurethane or the like.

This spacer or sponge 17 has a porosity between 4 and 90 ppi (pores per inch, a unit of measurement common among foam producers and used to define the quantity of free space present within the sponge spacer: the smaller the number of pores, the greater the air quantity within the sponge), preferably 10 ppi and advantageously 5 ppi. This porosity is chosen on the basis of the fuel present in the tank and of the overall system characteristics. It should be noted that the smaller the pore number per unit of volume, the better the filter performance.

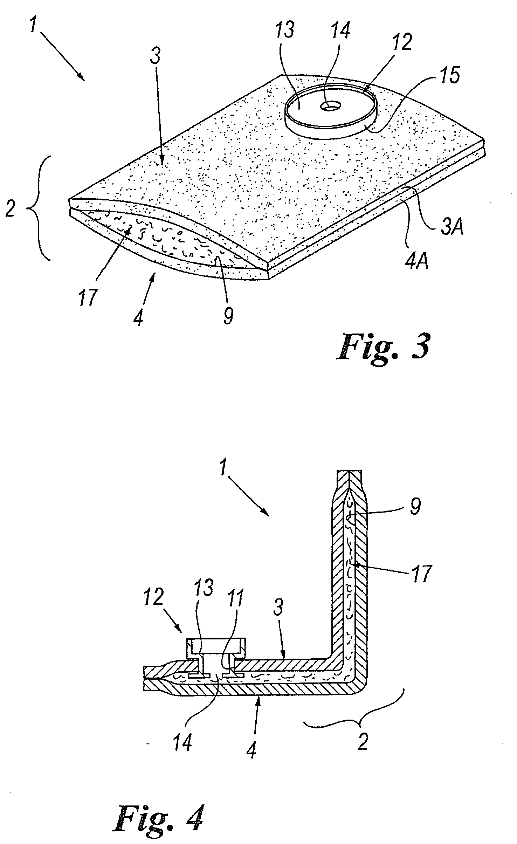

The spacer 17 is advantageously flexible to allow the filter 1 (the body of which is of intrinsically bendable material) to be folded, if necessary, during its insertion into the tank together with the pump 7 (as shown in Figure 4). This characteristic means that jointed structures do not have to be associated with the body 2 of the filter 1 (as happens in the state of the art) to enable the distance between the panels 3 and 4 of said body to be maintained (neither do a plurality of spacers have to be positioned at each of the folded parts of the filter), and at the same time makes it possible to fold it.

By virtue of this characteristic, there is a considerable flexibility in producing filters of elaborate and/or bent shape. In this respect, the use of open-cell sponge material enables a single spacer 17 to be shaped after its initial flat-layer production, without this resulting in loss of its initial filtration and throughput conditions. In fact, folding the spacer 17 does not limit its capacity to transfer the fluid (e.g. gasoline) between its two folded panels precisely because of its open-cell sponge material construction.

This characteristic and the ease with which the spacer 17 is used within a fuel filter enables the same production method to be used as for any form of filter 1: in this respect, the sponge material spacer (as described hereinafter) is always produced as a flat layer, which is then trimmed, sheared and shaped after securing to the panels 3 and 4 of the filter body 2 (of whatever shape) and before any folding of this latter (as shown in Figure 4).

This results in a considerable reduction in filter costs and production times, as rigid skeletons no longer have to be moulded or obtained for fixing to the panels 3 and 4 of the filter body 2, and neither does a plurality of tubular elements have to be produced with different shapes (in terms of width and/or length) depending on the different possible configurations of said body 2.

In order to maintain the panels 3 and 4 separated in any utilization condition, the spacer 17 has a minimum thickness less than or equal to 10-15 mm, advantageously equal to 5-6 mm and certainly greater than 2 mm. This thickness enables the spacer 17 to still be folded and be inserted into a filter 1 as shown in Figure 4 without negatively affecting its operability.

Figure 3 shows a variant of the invention. In this figure, in which parts equal to those described in relation to Figures 1, 2 and 4 are indicated by the same reference numerals, the body 2 of the filter 1 consists of a single flat element folded about itself (to hence define the panels 3 and 4) and closed along its touching free edges to define the closed internal cavity 9. The spacer or sponge 17 is placed in this latter, as in the embodiment of Figures 1, 2 and 4.

In both the embodiments of the described figures, once the panels 3 and 4 have been superimposed after the spacer 17 of reticular or sponge material has been inserted between them (either superimposed initially on at least one panel 3 or 4, or positioned inside the body 2 defined by the superimposed panels), said panels are fixed together along their free edge 3A, 4A. With this operation (easily and quickly implemented to hence enable high productivity at low cost), achieved for example by thermowelding, ultrasonic welding, radiofrequency welding, or linear vibration welding, the spacer 17 is also welded to the two panels and becomes part of the body 2 of the device 1, it being fixed within the cavity 9. This foam spacer 17, subsequently trimmed and sheared to shape it to the filter body 2, does not necessarily fill the cavity 9 on production of the device or filter 1, but certainly comes into contact with the opposing panels 3, 4 during use of the filter and maintains them separated. Because of its "spongy" characteristics it does not negatively affect the use of the filter as the fuel, for example gasoline, can always pass through it to reach the pump 7, filtered by the body 2.

By virtue of the invention, a filter can be formed with lower production times and costs than filters of the state of the art, as special moulds are not required for coupling rigid structures to the filtering part of the filter; moreover the components of the new filter can be produced with standardized dimensions (with a corresponding reduction of manufacturing costs), to be then dimensionally trimmed on the basis of their particular use. This enables different utilization requirements to be satisfied very quickly.

In addition to the above, it should be added that the presence of a spacer 17 of sponge material enables the filter to be also usefully used even if there is little fuel in the tank. This is because the presence of the sponge material within the filter 1 generates a capillary effect which conducts the residual fuel to the pump suction point, enabling the tank contents to be completely used.

Moreover, the spacer 17 of sponge material substantially improves the ESD (electrostatic discharge) value of the filter, so increasing the safety of the entire "system" including the filter, tank and fuel pump. This improvement is obtained by a lower gasoline flow velocity through the sponge material due in particular to the small dimensions of the internal pores of the spacer 17.

Various embodiments of the invention have been described when used to filter a vehicle fuel (gasoline/diesel fuel). However this invention can be used to filter a lubrication fluid, such as the oil used in automatic transmissions.

Other embodiments of the invention are also possible (such as that in which the spacer 17 is in the form of a plurality of layered elements securely coupled together), which are to be considered as falling within the scope of the present document.

## Claims

1. A filtering device (1) for use in filtering fluids used in a vehicle such as its fuel, in which case said device is to be positioned on the suction side of a vehicle fuel pump (7), or in filtering a lubricant used in the vehicle, said device (1) comprising a filter body (2) presenting two opposing panels (3, 4) joined together to define a closed internal cavity (9), in one (3) of said panels (3, 4) there being provided an aperture (11), the fluid filtered in passing through said body (2) penetrating into said cavity (9), a spacer (17) being positioned in the internal cavity (9) to maintain said panels (3, 4) separated and prevent their mutual contact, to hence maintain filtering operability of the device (1), this latter being without rigid elements positioned in said internal cavity (9) for the purpose of maintaining said panels (3, 4) separated, **characterised in that** said spacer (17) is of open-cell polymer foam material.

2. A device as claimed in claim 1, **characterised in that** the polymer foam material of said spacer (17) is chosen from reticular materials able to create reticulated foams, such as urethane, polyurethane or polyester.

3. A device as claimed in claim 1, **characterised in that** the foam spacer (17) has a porosity between 4 and 90 ppi, preferably between 9 and 14 ppi, and advantageously 5 ppi.

4. A device as claimed in claim 1, **characterised in that** the filter body (2) consists of a single flat element folded about itself to define the panels (3, 4) and joined along its touching free edges to define the closed internal cavity (9), the foam spacer (17) being connected to said filter body (2) by said panels (3, 4).

5. A device as claimed in claim 1, **characterised in that** the filter body (2) comprises separate panels (3, 4), said panels (3, 4) sandwiching the foam spacer (17), said panels (3, 4) being joined together along their free edge (3A, 4A).

6. A device as claimed in claim 1, **characterised in that** said foam spacer (17) has a thickness between 2 and 15 mm, such as to be foldable, this enabling the entire body (2) of the filtering device to be obtained in folded form.

7. A method for forming a filtering device in accordance with claim 1, said method comprising the formation of a filter body (2) presenting, when in use, two superimposed panels (3, 4) joined together along their free edge (3A, 4A), said panels defining an internal cavity (9) of said filter into which the fluid to be filtered penetrates, a spacer (17) for said panels being disposed within said cavity (9), **characterised by**:
a. providing a flat piece of open-cell polymer foam material to act as the spacer (17);
b. positioning said flat piece to correspond with at least one of the panels (3, 4) of the filter body (2) before these are joined together;
c. mutually superimposing said panels (3, 4) while maintaining the spacer between them;
d. joining said panels (3, 4) together along their edge (3A, 4A) such as to also secure the foam spacer between them.

8. A method as claimed in claim 7, **characterised in that** the foam spacer (17) is trimmed and sheared after its connection to the filter body (2) such as to shape it to this latter.

9. A method as claimed in claim 7, **characterised in that** the foam spacer (17) is folded to shape it to the form of the filter body (2).

10. Use of a device as claimed in claim 1 within an SCR (selective catalytic reduction) system for dispensing urea or similar liquids.

## Patentansprüche

1. Filtervorrichtung (1) zur Benutzung beim Filtrieren von den in einem Fahrzeug benutzten Fluiden, wie zum Beispiel dem Kraftstoff davon, wobei die genannte Vorrichtung in diesem Fall an der Saugseite der Kraftstoffpumpe (7) eines Fahrzeugs (7) angeordnet werden soll, oder beim Filtrieren eines in dem Fahrzeug benutzten Schmiermittel, wobei die Vorrichtung (1) einen Filterkörper (2) umfasst, der zwei gegenüberliegende, zur Bestimmung eines geschlossenen Innenraums (9) miteinander verbundene Platten (3, 4) aufweist, wobei in einer (3) der genannten Platten (3, 4) eine Öffnung (11) vorhanden ist, wobei das beim Durchströmen des genannten Körpers (2) filtrierte Fluid in den genannten Innenraum (9) eindringt, wobei ein Abstandshalter (17) in dem Innenraum (9) angeordnet ist, um die genannten Platten (3, 4) getrennt zu halten und um den gegenseitigen Kontakt zu vermeiden, so dass die Filtrierungsfunktionsfähigkeit der Vorrichtung (1) gehalten wird, wobei die Vorrichtung ohne in dem genannten Innenraum (9) angeordnete starre Elemente zum Aufrechterhalten der Trennung der genannten Platten (3, 4) ausgebildet ist, **dadurch gekennzeichnet, dass** der genannte Abstandshalter (17) aus offenzelligem Polymerschaum Material ist.

2. Vorrichtung nach Anspruch 1, **dadurch gekennzeichnet, dass** der Polymerschaum Material des genannten Abstandshalters (17) aus retikulären Materialien ausgewählt wird, die vernetzte Schaumstoffe, wie zum Beispiel Urethan, Polyurethan oder Polyester, erzeugen können.

3. Vorrichtung nach Anspruch 1, **dadurch gekennzeichnet, dass** der Schaum-Abstandshalter (17) eine Porosität zwischen 4 und 90 ppi, vorzugsweise zwischen 9 und 14 ppi, und vorteilhaft 5 ppi, hat.

4. Vorrichtung nach Anspruch 1, **dadurch gekennzeichnet, dass** der Filterkörper (2) aus einem einzigen flachen Element besteht, das zur Bestimmung der Platten (3, 4) um sich selbst gefaltet und zur Bestimmung des geschlossenen Innenraums (9) entlang seiner berührenden freien Ränder verbunden ist, wobei der Schaum-Abstandshalter (17) mit dem genannten Filterkörper (2) durch die genannten Platten (3, 4) verbunden ist.

5. Vorrichtung nach Anspruch 1, **dadurch gekennzeichnet, dass** der Filterkörper (2) getrennte Platten (3, 4) umfasst, wobei die genannten Platten (3, 4) den Schaum-Abstandshalter (17) einbetten, wobei die genannten Platten (3, 4) entlang ihrer freien Ränder (3A, 4A) miteinander verbunden sind.

6. Vorrichtung nach Anspruch 1, **dadurch gekennzeichnet, dass** der genannte Schaum-Abstandshalter (17) eine Dicke zwischen 2 und 15 mm hat, so dass er faltbar ist, wobei das erlaubt, den ganzen Körper (2) der Filtervorrichtung in gefalteter Form zu erzielen.

7. Verfahren zur Bildung einer Filtervorrichtung nach Anspruch 1, wobei das genannte Verfahren die Bildung eines Filterkörpers (2) umfasst, wobei der Filterkörper im Betrieb zwei überlagerte Platten (3, 4) aufweist, die entlang ihres freien Rands (3A, 4A) miteinander verbunden sind, wobei die genannten Platten einen Innenraum (9) des genannten Filters bestimmen, in den das zum filtrierenden Fluid eindringt, wobei ein Abstandshalter (17) für die genannten Platten innerhalb des genannten Innenraums (9) angeordnet ist, **gekennzeichnet durch**:
a. das Bereitstellen eines Flachstücks aus offenzelligem Polymerschaum als Abstandshalter (17);
b. das Anordnen des genannten Flachstücks, so dass es mindestens einem der Platten (3, 4) des Filterkörpers (2) entspricht, bevor die Platten miteinander verbunden sind;
c. das Überlagern der genannten Platten (3, 4) zueinander, während der Abstandshalter zwischen ihnen beibehalten wird;
d. das Verbinden der genannten Platten (3, 4) miteinander entlang ihres Rands (3A, 4A), so dass der Schaum-Abstandshalter zwischen ihnen auch befestigt wird.

8. Verfahren nach Anspruch 7, **dadurch gekennzeichnet, dass** der Schaum-Abstandshalter (17) nach der Verbindung mit dem Filterkörper (2) derart getrimmt und geschert wird, dass er der Form des Filterkörpers angepasst ist.

9. Verfahren nach Anspruch 7, **dadurch gekennzeichnet, dass** der Schaum-Abstandshalter (17) derart gefaltet wird, dass er der Form des Filterkörpers (2) angepasst ist.

10. Benutzung einer Vorrichtung nach Anspruch 1 in einem SCR (Selective Catalytic Reduction) System zum Abgeben von Harnstoff oder dergleichen Flüssigkeiten.

## Revendications

1. Dispositif de filtration (1) à utiliser pour la filtration des fluides employés dans un véhicule, par exemple son carburant, auquel cas ledit dispositif doit être positionné sur le côté aspiration de la pompe à carburant (7) d'un véhicule, ou bien pour la filtration d'un lubrifiant utilisé dans le véhicule, ledit dispositif (1) comprenant un corps de filtre (2) présentant deux panneaux opposés (3, 4) reliés ensemble pour définir une cavité intérieure fermée (9), une ouverture (11) étant prévue dans un (3) desdits panneaux (3, 4), le fluide filtré pendant le passage à travers ledit corps (2) pénétrant dans ladite cavité (9), un écarteur (17) étant positionné dans la cavité intérieure (9) pour maintenir lesdits panneaux (3, 4) séparés et éviter leur contact réciproque, maintenant ainsi la fonctionnalité de filtration du dispositif (1), ce dernier étant sans éléments rigides positionnés dans ladite cavité intérieure (9) afin de maintenir lesdits panneaux (3, 4) séparés, **caractérisé en ce que** ledit écarteur (17) est en mousse polymère à cellules ouvertes.

2. Dispositif selon la revendication 1, **caractérisé en ce que** la mousse polymère dudit écarteur (17) est choisie parmi les matériaux réticulaires qui sont en mesure de créer des mousses réticulées, tels que l'uréthane, le polyuréthane ou le polyester.

3. Dispositif selon la revendication 1, **caractérisé en ce que** l'écarteur en mousse (17) a une porosité comprise entre 4 et 90 ppi, préférablement comprise entre 9 et 14 ppi et avantageusement mesurant 5 ppi.

4. Dispositif selon la revendication 1, **caractérisé en ce que** le corps de filtre (2) est constitué d'un seul élément plat replié autour de lui-même pour définir les panneaux (3, 4) et relié le long de ses extrémités libres en contact pour définir la cavité intérieure fermée (9), l'écarteur en mousse (17) étant connecté audit corps de filtre (2) par lesdits panneaux (3, 4).

5. Dispositif selon la revendication 1, **caractérisé en ce que** le corps de filtre (2) comprend des panneaux (3, 4) séparés, lesdits panneaux (3, 4) enserrant l'écarteur en mousse (17), lesdits panneaux (3, 4) étant reliés ensemble le long de leur bord libre (3A, 4A).

6. Dispositif selon la revendication 1, **caractérisé en ce que** ledit écarteur en mousse (17) a une épaisseur comprise entre 2 et 15 mm, de sorte à être repliable, permettant ainsi d'obtenir le corps (2) entier du dispositif de filtration en forme repliée.

7. Procédé pour former un dispositif de filtration selon la revendication 1, ledit procédé comprenant la formation d'un corps de filtre (2) présentant, lors de son utilisation, deux panneaux (3, 4) superposés reliés ensemble le long de leur bord libre (3A, 4A), lesdits panneaux définissant une cavité intérieure (9) dudit filtre dans laquelle le fluide qui doit être filtré entre, un écarteur (17) pour lesdits panneaux étant agencé à l'intérieur de ladite cavité (9), **caractérisé par** les étapes suivantes :
a. prévoir une pièce plate de mousse polymère à cellules ouvertes pour agir en tant qu'écarteur (17) ;
b. positionner ladite pièce plate de sorte qu'elle corresponde à au moins un des panneaux (3, 4) du corps de filtre (2) avant que ceux-ci ne soient reliés ensemble ;
c. superposer lesdits panneaux (3, 4) l'un à l'autre, tout en maintenant l'écarteur entre eux ;
d. relier lesdits panneaux (3, 4) ensemble le long de leur bord (3A, 4A) de sorte à fixer aussi l'écarteur en mousse entre eux.

8. Procédé selon la revendication 7, **caractérisé en ce que** l'écarteur en mousse (17) est découpé et cisaillé après sa connexion au corps de filtre (2), de sorte à l'adapter à la forme de ce dernier.

9. Procédé selon la revendication 7, **caractérisé en ce que** l'écarteur en mousse (17) est replié de sorte à l'adapter à la forme du corps de filtre (2) .

10. Utilisation d'un dispositif selon la revendication 1 dans un système SCR (selective catalytic réduction) pour délivrer urée ou liquides similaires.
